# EUROPÄISCHE PATENTANMELDUNG

(11) **EP 1 103 205 A1**
(43) Veröffentlichungstag der Anmeldung: **30.05.2001**
(21) Anmeldenummer: 99123627.4
(22) Anmeldetag: 27.11.1999
(51) Int. Cl.: A47B 23/04, G06K 11/18, B42F 13/40

(54) **Broschürenhalter - Mousepad**

(71) Anmelder: DDS ImageSysteme GmbH, 42719 Solingen (DE); Ehlers, Dominik, 40699 Erkrath (DE)
(72) Erfinder: Bonack, Armin, 42655 Solingen (DE); Ehlers, Dominik, 40699 Erkrath (DE)

(57) **Zusammenfassung**

Die Erfindung betrifft ein Broschürenhalter-Mousepad in verschiedener Ausgestaltung, das mittels eingebauter oder angesetzter Stützvorrichtung ein im Auflagewinkel individuell regulierbares Einstellen einer durch Rückklappen der Seiten von vorn nach hinten lesbaren Broschüre oder eines entsprechend gestalteten Buches an günstigem Platz auf dem Arbeitstisch hinter dem Mousepad erlaubt.

Besonderes Merkmal des erfindungsgemäßen Gegenstandes ist es, daß
neben der bei geöffentem Gegenstand nutzbaren Lauffläche für die Computer-Rollmaus der Gegenstand im geschlossenen Zustand obenauf eine weitere Lauffläche aufweist.

## Beschreibung

Mousepad (Lauffläche für eine Rollkugel-Computersteuerung) in fester Verbindung oder mit einer Vorrichtung zur Aufnahme einer im Aufstellwinkel variablen Stütze für die Aufnahme einer Broschüre oder eines Buches, die senkrecht auf die Stütze aufgestellt und durch Wegklappen der Seiten von vorn nach hinten gelesen werden, wobei nach dem Schließen des Gegenstandes durch Einklappen der Stützvorrichtung oben auf dem Gegenstand eine zweite Lauffläche befindlich ist.

In der einfachsten Version des erfindungsgemäßen Gegenstandes besteht dieser aus einem dreifach gefalteten starken Karton oder einer starren Folie in der Breite eines Mousepads und in seiner vierfachen Länge.

Das vorderste der vier Segmente ist auf der auf der Arbeitsfläche (Schreibtisch) aufliegenden Unterseite mit einem Speziälkleber, z.B. Armalux, versehen, der auf allen erdenklichen Flächen eine gute Haftung vermittelt, aber jederzeit rückstandslos wieder abgehoben und neu mit gleicher Haftwirkung wieder aufgelegt werden kann. Dieses Segment bildet den vorderen Fuß des erfindungsgemäßen Gegenstandes. Oben auf dem vorderen Fuß befindet sich eine Rollfläche für die Computer-Mouse.

Das zweite der vier Segmente, das am hinteren Ende des vorderen Fußes fest mit ihm verbunden ist, wird zum Aufstellen des Broschürenhalters nach vorn und nach oben geklappt, sodaß es eine schräg gegen den vorderen Fuß aufstehende Lehne bildet.

Diese Lehne ist an ihrem oberen Rand fest verbunden mit der Stütze, die von oben zur Arbeitsfläche hin heruntergeklappt wird, sodaß sie mit der Lehne einen gleichen Aufstellwinkel hat.

Am unteren Ende der Stütze befindet sich das vierte Segment, daß als hinterer Fuß fungiert. Der hintere Fuß ist gegenüber der Stütze nach vorn bzw. innen eingeklappt und liegt voll auf der Arbeitsfläche auf, auf der er mittels Haftklebers festhält (z.B. Armalux).

Bei fest aufliegendem hinteren Fuß kann der vordere Fuß von der Tischfläche abgehoben und so weit nach hinten und auch auf die Oberseite des hinteren Fußes verschoben werden, bis der für den Anwender günstigste Aufstellwinkel der Lehne erreicht ist. Es bietet sich an, für diese Version flache Segmente zu verwenden, damit nicht beim Überlappen des vorderen auf den hinteren Fuß ein störendes Gefälle entsteht.

Auf den so montierten Broschürenhalter brauchen eine Broschüre oder ein Buch nur aufgelegt und zum Lesen Seite für Seite nach hinten geklappt zu werden. Broschüre oder Buch sind am besten auf dem Broschürenhalter zu benutzen, wenn sie an der Bindung leicht wegklappbar sind, insbessondere durch die Verwendung einer Ringmechanik.

Sollen auch die Rückseiten der Broschüre oder des Buches, die bei dieser Anordnung immer nicht einsichtig hinten auf der Stütze liegen, gelesen werden, müssen Buch oder Broschüre nach der letzten Vorderseite nur umgekehrt auf den Broschürenhalter gelegt werden.

Wird der Broschürenhalter nicht gebraucht, muß nur der vordere Fuß von der TischunterJäge abgehoben und ganz über den eingeklappten hinteren Fuß geschoben werden, wodurch Stütze und Lehne gleichfalls zusammenklappen, sodaß die vier Segmente des Broschürenhalter-Mousepads dann so aufeinanderliegen, daß obenauf die Oberseite der Stütze zu liegen kommt, die als zweite Lauffläche für die Rollmaus ausgebildet ist. In diesem Zustand ist der vordere Fuß nach innen in den Gegenstand eingezogen.

Das Broschürenhalter-Mousepad stellt ein wertvolles Arbeitsmittel dar wie es noch nicht vorhanden oder beschrieben ist. Da das Mousepad sich als Arbeitsmittel im Umfeld des Computers weithin durchgesetzt hat und daher fast an jedem Computer-Arbeitsplatz weltweit zu finden ist, gibt es immer mehr Bemühungen, den von ihm beanspruchten Platz auch für andere sinnvolle Zwecke zu nutzen. Die Erfindung hat sich die Aufgabe gestellt, in Verbindung mit dem Mousepad einen Ort zu finden, an dem eine Broschüre oder ein Buch während der Arbeit am Computer ohne Störung der sonstigen Arbeit und ohne Vergeudung wertvoller Arbeitsfläche zu lesen sind. Der Anwender soll von seiner Arbeit am Computer nicht abgelenkt werden. Er soll eine gute. individuell einstellbare Sicht auf Buch oder Broschüre haben. Seine Hände soll er für die Arbeit mit der Tastatur und der Rollmaus frei behalten. Zudem soll der wichtigste Teil seines Arbeitsplatzes, nämlich der vordere Bereich, in dem sich die Hände meist bewegen, frei bleiben. All diese Aufgaben löst die Erfindung, indem sie Broschüre oder Buch am hinteren Ende des Mousepads aufstellt.

Das Ergebnis ist erstrebenswert, weil es Sinn macht, das Arbeiten am Computer mit seinem frei definierbaren Speicher und dem veränderlichen Inhalt des Bildschirms zusätzlich mit den festen Daten herkömmlicher Druckschriften zu bereichern. Anwendungsgebiete sind zuvorderst die Programme und Bedienungsanleitungen für den Computer, sein Zubehör und die Software. Diese Anleitungen sind durch Lesen gedruckter Schriften besser zu benutzen als am Bildschirm, weil sie ein jederzeitiges schnelles Finden der Informationen ermöglichen, ohne daß der aktuelle Arbeitsspeicher und der Bildschirminhalt für jeden Zugriff gewechselt oder geändert werden müssen. Ein weiterer wichtiger Anwendungsfall für die Nutzung des Broschürenhalter-Mousepads sind Kurse und Lehrbücher, insbesondere für das Erlernen von Sprache. Zu den audiovisuellen Möglichkeiten des Computers ist es eine wichtige Bereicherung, ergänzend auf die durch einfaches Abklappen jederzeit schnellstens erreichbaren Daten auf der gedruckten Anleitung verfügen zu können. Auch Unternehmen werden diese Möglichkeiten der bündigen Information ihrer Sachbearbeiter oder ihrer Geschäftspartner entdecken.

In der Praxis bekannt sind Vorlagenhalter, die seitlich vom Bildschirm weggeklappt werden und an denen eine Vorlagenseite mittels eines Clips befestigt wird. Bekannt ist darüberhinaus ein Vorlagenhalter, der wie ein Springrahmen am Mousepad befestigt ist. Wenn dieser Rahmen am unteren Ende des Mousepads aufgestellt ist, kann man dort ebenfalls Vorlagenseiten festmachen. Diese Vorlagenhalter sind zur Lösung der erfindungsgemäßen Aufgabe nicht geeignet. Sie eignen sich nur für die Befestigung einzelner Seiten. Sie ermöglichen zudem nicht die individuelle Einstellung des Blickwinkels. Schließlich wird in der heutigen Arbeitswelt kaum jemals ein Vorlagenhalter benötigt, weil Texte nicht mehr abgeschrieben zu werden pflegen. Wenn man will, kann man das erfindungsgemäße Broschürenhalter-Mouesepad auch als Vorlagenhalter nutzen, indem man die Lehne des Halters nicht allzu steil stellt und einfach die Vorlagenseiten dagegen anlehnt.

In einer Variante entsteht ein Broschürenhalter-Mousepad dadurch, daß ein Mousepad lediglich am hinteren Ende mit einer Aufstellrinne versehen wird, in die die Broschüre mit der Bindung nach oben eingestellt wird. Diese Rinne ist nach vorne hin so gerundet, daß die Seiten der Broschüre leicht nach vorn und nach oben aus ihr herausgehoben werden können. Statt einer besonderen fremden Stütze können bei dieser Lösung der untere Deckel der Broschüre als Lehne und der obere gleich ganz nach hinten geschlagene Deckel als Lehne verwendet werden. Dieser Deckel ist innen als Lauffläche für die Rollmaus ausgebildet, die beim geschlossenen Zustand des Gegenstandes genutzt wird.

Um den Aufstellwinkel individuell einstellen zu können, können auf das freie Ende der Stütze, die auf dem Arbeitstisch aufsteht, eine gummierte Leiste oder einzelne Gummistopfen aufgesteckt werden.

Diese Ausführung läßt sich auch so variieren, daß Mousepad und Broschüre aus einem Material und in fester Verbindung miteinander hergestellt werden, wobei Mousepad und unterer Deckel der Broschüre aneinander hängen. Der Deckel wird zur Lehne aufgestellt und die Broschüre befindet sich mit der Bindung oben vor ihr. Sodann wird der obere Deckel der Broschüre als Stütze nach hinten geklappt und mittels auf ihr unteres Ende gesteckten Gummi leiste oder Gummifüßen im jeweils gewünschten Anstellwinkel auf dem Arbeitstisch gehalten.

In einer aufwendigeren Version kann am Mousepad auch eine nach hinten abklappbare Vorrichtung in gleicher Größe angebracht werden, etwa mittels einer auf beiden Teilen angeklebten Textilleiste. Diese Vorrichtung kann auf ihrer Unterseite als Lauffläche ausgebildet werden, die benutzt wird, wenn der Gegenstand geschlossen ist. Innen können auf der Vorrichtung aber auch eine Reihe von Arretierungsrillen angebracht werden, in die der Stützdeckel der Broschüre variabel eingestellt werden kann. Mousepad und Vorrichtung können auch aus einem einheitlichen Stück Material hergestellt werden, in dessen Mitte ein Gelenk zum Umklappen gestanzt ist.

Statt eine Broschüre selbst in die Auflagerillen auf Mousepad und anhängender Vorrichtung zu stellen, kann man auch einen gesonderten Aufstellmechanismus vorsehen, gegen den man, wenn man will, eine Broschüre stellen oder über den man sie legen kann. Wenn bei einem solchen, etwa aus Kunststoff oder Metall gefertigten Klapprahmen mit Lehne und Stütze beide Teile etwas weniger breit gefertigt sind als die Vorrichtung und wenn man die Lehne etwas kürzer macht als die Stütze, kann man diese Konstruktion einklappen und vor dem Schließen des Gesamtgegenstandes nach innen in vorgefertigte Aussparungen in der an das Mousepad anhängenden Vorrichtung einlegen.

In einer letzten Abwandlung kann eine Broschüre dadurch gehalten werden, daß sie lediglich im Gelenk an der Außenseite ihres Rückdeckels mit einem zusätzlichen abklappbaren Deckel versehen wird, der nach Hochklappen des Rückdeckels von ihm nach hinten weggeklappt wird. Auch in diesem Fall kann der Aufstellwinkel individuell festgelegt werden, weil der Stützdeckel im Bereich der Auflage mit einer Aufsteck1eiste aus Gummi oder einem Gummistopfen versehen wird. Die Stütze ist obenauf als zweite Lauffläche ausgebildet, die benutzt wird, wenn die Broschüre geschlossen ist. Die Seiten der Broschüre müssen bei dieser Abwandlung sinnvollerweise verstärkt sein, weil ihre auf dem Tisch aufliegenden Seiten bei Öffnung der Broschüre als Laufflächen dienen. Bei dieser Abwandlung können jeweils zwei Seiten der Broschüre vom Bediener des Computers gleichzeitig gelesen werden, weshalb die Seiten fortlaufend und nicht alternierend wie bei den anderen Ausführungen bedruckt sein müssen. Natürlich kann man eine solche Broschüre auch auf eines der vorbeschriebenen Broschürenhalter-Mousepads auflegen und statt der Normallauffläche des Geräts die aufliegenden einzelnen Seiten der Broschüre als Laufflächen nutzen.

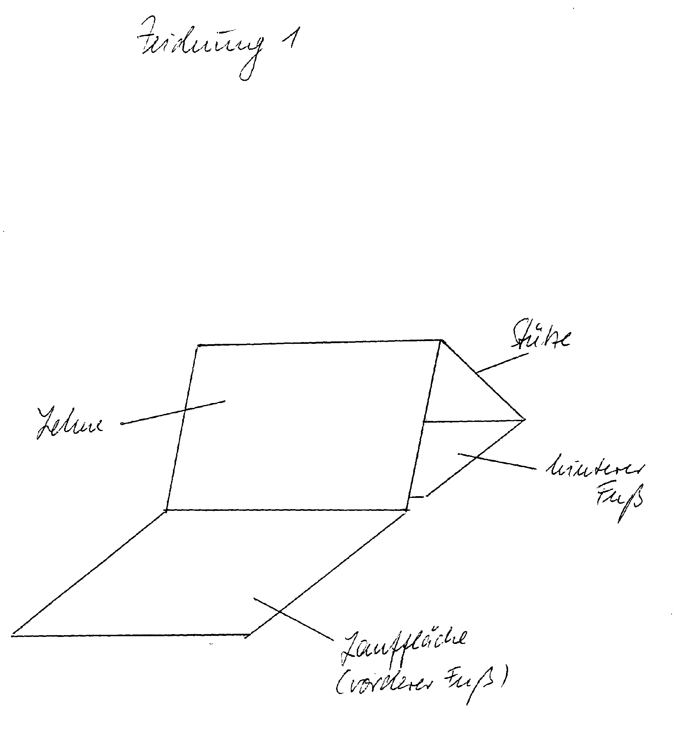

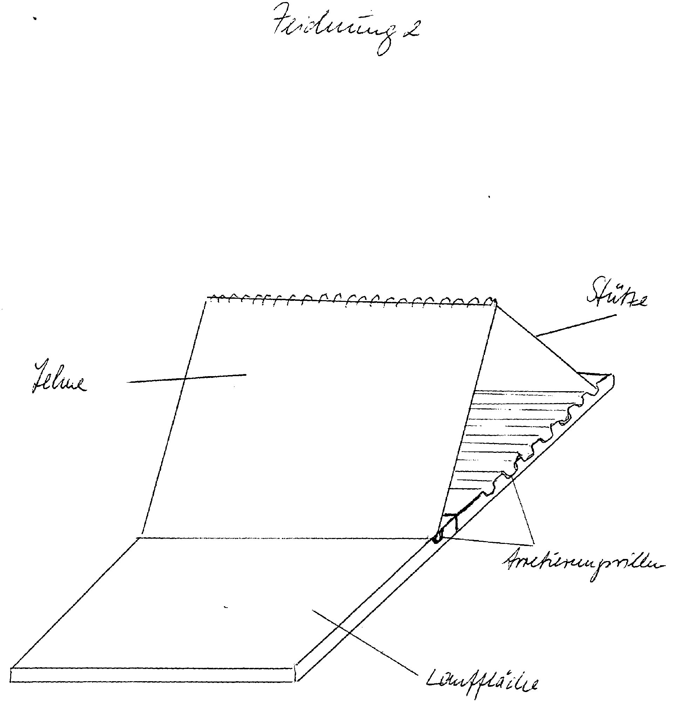

## Patentansprüche

1. Broschürenhalter-Mousepad, ***dadurch gekennzeichnet***, daß mit dem Mousepad eine individuell im Anstellwinkel einstellbare Vorrichtung verbunden wird, die aus Stütze, Lehne und Fuß besteht und auf die eine Broschüre oder ein Buch gestellt werden, die durch Abklappen ihrer Seiten nach hinten gelesen werden.

2. Broschürenhalter-Mousepad nach Anspruch 1, ***dadurch gekennzeichnet***, daß neben der Lauffläche des Mousepads, das mit der Haltevorrichtung verbunden wird, auf der Oberfläche des zusammen mit der Haltevorrichtung zusammengeklappten Gegenstandes eine weitere Lauffläche ausgebildet ist.

3. Broschürenhalter-Mousepad nach Anspruch 1, ***dasdurch gekennzeichnet***, daß Mousepad und Haltevorrrichtung aus einem Stück (starker Karton oder starke Folie) bestehen, die durch dreifache Faltung vier Teile in der Größe des Mousepads entstehen.

4. Broschürenhalter-Mousepad nach Anspruch 3, ***dadurch gekennzeichnet***, daß das vorderste der vier Segmente oben auf und gleichfalls das Segment 3 oben auf eine Lauffläche für die Rollmaus tragen.

5. Broschürenhalter-Mousepad nach Anspruch 3, ***dadurch gekennzeichnet***, daß das Segmente 2 vom liegenden Segment 1 aus hochgeklappt wird und von dessen Oberkante aus das Segment 3 nach unten, wo das Segment 4 nach vorn bzw. innen eingeklappt auf der Arbeitsfläche aufliegt.

6. Broschürenhalter-Mousepad nach Anspruch 3, ***dadurch gekennzeichnet***, daß Segment 1 und Segment 4 mit ihren auf der Arbeitsfläche aufliegenden Seiten mit einem jederzeit rückstandsfrei abhebbaren und wieder nutzbaren Haftkleber wie Armalux versehen sind.

7. Broschürenhalter-Mousepad nach Anspruch 1, ***dadurch gekennzeichnet***, daß das Mousepad mit dem Rückdeckel einer Broschüre fest verbunden ist und nach vorne weggeklappt wird, während der Vorderdeckel bei hochgestellter Broschüre nach hinten weggeklappt wird.

8. Broschürenhalter-Mousepad nach Anspruch 1, ***dadurch gekennzeichnet***, daß am hinteren Rand des Mousepads eine Auflagerinne vorgesehen ist, die so nach vorn gerundet ist, daß ein leichtes Herausbehen der Seiten einer mit festen Einbanddeckel senkrecht einzustellenden Broschüre nach vorn und nach oben möglich ist.

9. Broschürenhalter-Mousepad nach Anspruch 1, 7 und 8, ***dadurch gekennzeichnet***, daß der nach hinten weggeklappte zweite Einbanddeckel der Broschüre an der Auflagestelle auf dem Arbeitstisch mit einer Gummi leiste oder mit Gummistopfen versehen ist.

10. Broschürenhalter-Mousepad nach Anspruch 1. und 8, ***dadurch gekennzeichnet***, daß das Mousepad am hinteren Rand mit einer Vorrichtung verbunden wird, die mit ihrer auf dem Arbeitstisch aufliegenden Seite als zweite Lauffläche ausgebildet ist und die auf der anderen Seite mehrere Arretierungsrillen zur Aufnahme des zweiten Einbanddeckels der Broschüre versehen ist.

11. Broschürenhalter-Mousepad nach Anspruch 1, 8 und 10, ***dadurch gekennzeichnet***, daß ein gesonderter Broschürenhalter, bestehend aus einer aufstehenden Lehne und im Gelenk davon abklappend einem Stützrahmen, die jeweils in den Arretierungsrillen auf Mousepad und anhängende Vorrichtung gemäß Anspruch 9 eingestellt werden.

12. Broschürenhalter-Mousepad nach Anspruch 1, 8, 10 und 11, ***dadurch gekennzeichnet***, daß in die Vorrichtung gemäß Anspruch 8 neben den Arretierungsrillen Aussparungen vorgesehen werden und daß in diese der Stützrahmen gemäß Anspruch 10 eingelegt wird, wobei der Stützrahmen etwas schmaler und etwas kürzer als die Vorrichtung sein muß.

13. Broschürenhalter-Mousepad nach Anspruch 1, ***dadurch gekennzeichnet***, daß die Seiten einer Broschüre als Laufflächen ausgebildet (verstärkt) sind, während der der hoch zu klappende obere Einbanddeckel mit einem weiteren Deckel verbunden ist, der auf der Auflagefläche mit einer Gummi leiste oder einem Gummistopfen nach Anspruch 9 versehen oder mit noch einem weiteren nach innen einklappbaren Deckel verbunden ist, der mit seiner auf dem Arbeitstisch aufliegenden Seite mit ablösbarem Haftkleber verbunden ist.
